# EUROPÄISCHE PATENTANMELDUNG

(11) **EP 1 091 333 A2**
(43) Veröffentlichungstag der Anmeldung: **11.04.2001**
(21) Anmeldenummer: 00121162.2
(22) Anmeldetag: 29.09.2000
(51) Int. Cl.: G08G 1/01

(54) **Verfahren zur Erfassung von Verkehrsdaten mittels Lokalisierungsdaten von Mobilfunkkommunikationssystemen**

(30) Priorität: 08.10.1999 DE 19948877
(71) Anmelder: TEGARON Telematics GmbH, 53121 Bonn (DE)
(72) Erfinder: Müller, Dietmar, 53227 Bonn (DE)
(74) Vertreter: Riebling, Peter, Dr.-Ing.

(57) **Zusammenfassung**

Die Erfindung betrifft ein Verfahren zur Erfassung von Verkehrsdaten mittels Lokalisierungsdaten von digitalen zellularen Mobilfunkkommunikationssystemen, wobei der Aufenthaltsort von Mobilstationen des Mobilfunkkommunikationssystems durch Laufzeitmessungen der zwischen Mobilstation und mindestens zwei Basisstationen ausgetauschten Signale ermittelt wird.
Die Erfindung zeichnet sich dadurch aus, daß die Ermittlung des Aufenthaltsortes ausgewählter Mobilstationen regelmäßig in definierten zeitlichen Abständen erfolgt, wobei die Mobilfunkendgeräte in definierten zeitlichen Abständen eine bekannte Bitfolge an mindestens zwei Basisstationen des Mobilkommunikationssystems senden, mit der die Basisstationen durch Korrelationsberechnungen den zeitlichen Abstand zu den jeweiligen Mobilfunkendgeräten ermitteln, und daß die Informationen über die zeitlichen Abstände der Mobilfunkendgeräte von den Basisstationen an eine Zentrale weitergeleitet werden, die mittels einem geeigneten mathematischen Verfahren anhand der Informationen eine Ortsbestimmung der Mobilfunkendgeräte durchführt.

## Beschreibung

Die vorliegende Erfindung behandelt ein Verfahren zur Erfassung von Verkehrsdaten mittels Lokalisierungsdaten von Mobilfunkkommunikationssystemen sowie eine Verwendung dieser Lokalisierungsdaten. Dabei wird der Aufenthaltsort von Mobilstationen des Mobilfunkkommunikationssystems in bekannter Weise durch Laufzeitmessungen der zwischen Mobilstation und mindestens zwei Basisstationen ausgetauschten Funksignale ermittelt.

Moderne Verkehrstelematikdienste, wie z.B. teilnehmer- und/oder ortsbezogene Verkehrsinformationen, Routenempfehlung sowie sogenannte dynamisierte onboard und offboard Navigationssysteme, benötigen für die Diensteerbringung fundamentierte Informationen über den aktuellen und möglichen zukünftigen Verkehrsfluß.

Bislang werden Verkehrsdaten beispielsweise durch Sensoren, die über Autobahnbrücken oder an Verkehrsschilder montiert sind oder mittels Baken realisiert werden, ermittelt. Weiterhin werden Induktionsschleifen in die Fahrbahndecke eingelassen, um die Verkehrslast streckenbezogen zu erfassen. Diese Technik ist jedoch recht aufwendig hinsichtlich der Anbringung und Wartung der einzelnen Elemente.

Ein weiteres Verfahren beruht auf dem sogenannten FCD-Verfahren (floating cat data), welches im sogenannten GATS-Standard (Global AutomotiveTelematics Standard) beschrieben ist. Bei diesem Verfahren werden über die Fahrzeuge, die über eine entsprechenden Lokalisierungseinrichtung verfügen nach festgelegten Algorithmen die Verkehrsdaten zur weiteren Verarbeitung an eine Zentrale gesendet. Beim FCD-Verfahren wird in der Fahrzeugeinheit zumindest ein GPS-Empfänger sowie ein mobiles Kommunikationssystem benötigt.

Der Nachteil dieser bisher verwendeten Verfahren ist, daß ein hoher Realisierungsaufwand im Fahrzeug bzw. in der Infrastruktur bei der Aufstellung von Sensoren und den Induktionsschleifen für die Erfassung von Verkehrsdaten betrieben werden muß. GPS-Ortsbestimmung ist von zusätzlichen Komponenten abhängig und deshalb aufwendiger und kostenintensiv.

Aufgabe der vorliegenden Erfindung ist es ein Verfahren zur Erfassung von Verkehrsdaten mittels Lokalisierungsdaten von Mobilfunkkommunikationssystemen zu realisieren, das auf der Grundlage von fundamentierten, nicht personifizierten Daten eine einfach zur realisierende Bestimmung von Verkehrsflüssen hinsichtlich Intensität und Bewegungsgeschwindigkeit ermöglicht, auf deren Grundlage kurz- und langfristige Maßnahmen zur Regelung von Verkehrsflüssen durchgeführt werden können.

Die Lösung der gestellten Aufgabe erfolgt anhand der technischen Lehre der unabhängigen Patentansprüche.

Vorteilhafte Ausführungsformen und Weiterbildungen der Erfindung sind in den abhängigen Patentansprüchen angegeben.

Kern der Erfindung ist, daß die Ermittlung des Aufenthaltsortes ausgewählter Mobilstationen regelmäßig in definierten zeitlichen Abständen erfolgt, so daß diese Daten direkt als Verkehrsdaten zur Verkehrsflußplanung o.ä. herangezogen werden können.
Die geographische Bestimmung des Mobilfunkteilnehmers erfolgt anhand des Mobilfunksystemes in der Weise, daß ausgewählte Mobilfunkendgeräte regelmäßig an zwei oder mehrere Basisstationen eine bekannte Bitreihenfolge senden, mit denen die Basisstationen durch Korrelationsberechnungen den zeitlichen Abstand zum Endgerät ermitteln können. Die so ermittelten Werte werden von allen Basisstationen an eine für die Ortsbestimmung verantwortliche Lokalisierungszentrale gesendet. Bei bekanntem geographischen Ort der Basisstationen läßt sich in der Lokalisierungszentrale aus den ermittelten Zeitdifferenzen zu der Mobilstation mittels eines mathematischen Verfahrens, z.B. hyperbolischer Trilateration, eine Positionsbestimmung der Mobilstationen durchführen.

Im Gegensatz zum Stand der Technik sendet das Endgerät nicht wie bisher nur bei einem Teilnehmerbedarf (z.B. bei einem Notruf), sondern regelmäßig nach einem festzulegenden zeitlichen Ablauf die oben genannte Bitreihenfolge. Hierdurch ist gewährleistet, daß der Mobilfunknetzbetreiber in seiner Lokalisierungzentrale regelmäßig Lokalisierungsangaben zu einem Endgerät erhält. Da dem Netzbetreiber die zeitlichen Abstände der so erhaltenen Lokalisierungsangaben bekannt sind, ist eine Ermittlung einer durchschnittlichen Geschwindigkeit für ein Endgerät möglich. Sind mehrere Endgeräte mit diesem Leistungsmerkmal ausgestattet, so können durch dieses Verfahren umfangreiche Ganglinien bzw. Bewegungsmuster von den Teilnehmern bzw. deren Endgeräte aufgenommen werden, indem diese z.B. auf digitalen Karten dargestellt werden.

Durch geeignete Korrelations- und Plausibilitätsverfahren können unterschiedliche Nutzerwege (z.B. Autobahnen, Bundes- und Landesstraßen sowie Fußgängerwege und Ortststraßen) erkannt und durch die gewonnene durchschnittliche Reisegeschwindigkeit für die Verkehrsplanung herangezogen werden.

Um sicherzustellen, daß keine personenbezogenen Daten mißbräuchlich verwendet werden, ist es notwendig, daß die Rufnummern der Teilnehmer anonymisiert werden.

Unter Verwendung des erfindungsgemäßen Verfahrens wird in dem endgeräteseitig nur noch ein mobiles Kommunikationssystem benötigt, welches die Teilnehmer mit sich führen müssen. Weitere, zusätzliche dezentrale Kommunikationssysteme oder Ortungssysteme sind dazu nicht notwendig. Es entfällt also der bisher übliche Aufwand der Anbringung und Wartung von dezentralen Erfassungseinheiten.

Wichtig ist deshalb für die vorliegende Erfindung, daß die Ortsbestimmung des Mobilfunkteilnehmers lediglich anhand des Mobilfunksystems erfolgt, wobei nun erfindungswesentlich in bestimmten Zeitabständen die Position des Mobilfunkteilnehmers erfaßt, anonymisiert und gespeichert wird. Für die Bestimmung der Bewegungsgeschwindigkeit werden diese Daten mit einem eigenen Verschlüsselungssystem verarbeitet um gewährleisten zu können, daß zwar die richtigen Daten für die Ermittlung der Bewegungsgeschwindigkeit zu Grunde gelegt werden, daß aber keine Möglichkeit besteht nach der Verschlüsselung zum Zwecke der Anonymisierung die erfaßten Daten dem Mobilfunkteilnehmer zuzuordnen.

Zur Ortsbestimmung des Mobilfunkteilnehmers werden in einer, von Erfassung der anonymisierten Daten getrennten Auswerteeinrichtung, die zum Mobilfunkteilnehmer zugehörigen Daten entsprechend gespeichert und weiterbearbeitet. Dies geschieht jedoch unabhängig vom vorliegenden erfindungswesentlichen Verfahren. Durch dieses unabhängige Ortsbestimmungsverfahren sind die Mobilfunknetzbetreiber in der Lage, die Lokalisierung ihrer Teilnehmer im Falle eines Notrufs durchzuführen.

Werden diese Verfahren hinsichtlich ihrer Anwendung erweitert, d.h. die Lokalisierung wird in zeitlich festgelegten Rahmen durchgeführt, wobei aus Datenschutzgründen ein Verfahren für die Anonymisierung der teilnehmerrelevanten Daten eingeführt werden muß, sind alle hierzu beschrieben Verfahren dienlich, mittels einer entsprechenden Auswertung fundamentierte Verkehrsdaten zu ermitteln wie es die vorliegende Erfindung vorsieht. Auf dieser Basis können dann anonymisierte Verkehrsdaten als Grundlage für eine Verkehrsregelung herangezogen werden. Die Verkehrsregelung kann dabei sowohl unmittelbar erfolgen als auch mittelbar. Das bedeutet, daß die Verkehrsregelung direkt auf die Signalsteuerung beispielsweise einer Stadt einwirken kann, wenn z. B ein größeres Verkehrsaufkommen über die Lokalisierungsdaten des Mobilfunknetzes festgestellt wird, wie dies z. B. bei Messebesuchen oder anderen besuchsträchtigen Veranstaltungen der Fall ist. In solchen Fällen kann unmittelbar in das Verkehrsgeschehen eingegriffen werden, ohne daß zusätzliche dezentrale Einrichtungen dafür erforderlich wären. Hierdurch ergibt sich ein entscheidender Vorteil, indem dieses Verfahren soweit ortsunabhängig funktioniert als es keine zusätzlichen Einrichtungen zur Erfassung des Verkehrsaufkommens erfordert.

Es ist lediglich notwendig, daß die Kommune entsprechende Signalsteuerungen installiert, die nach den eingehenden Informationen entsprechend geregelt werden. Durch diese Lokalisierungsverfahren mittels entsprechender Mobilfunkendgeräte ist die Ermittlung von verkehrsrelevanten Daten wesentlich vereinfacht.

Die bisher vorgestellten Lösungsansätze für die Ermittlung der Position eines Teilnehmers, der einen Notruf auslöst, sehen vor, daß die Lokalisierung nur auf Bedarf des Teilnehmers ermittelt werden soll. Dahingegen sieht das erfindungsgemäße Verfahren vor, daß die Positionsermittlungen - unabhängig vom Teilnehmerbedarf - nach zeitlich festgelegten Regeln erfolgen und die somit gewonnenen Positionsdaten zumindest einem Korrelation- und Plausibilitäts-Algorithmus unterzogen werden. Somit sind Verkehrsdaten nicht nur für die Verkehrsflußplanung, sondern auch für die städtische Bauplanung verfügbar. In diesen Fällen werden die erfaßten Daten entsprechend aufbereitet um die Datenflut sinnvoll zu bewältigen.

Um den Schutz der personenbezogenen Daten sicherstellen zu können, müssen bei der Auswertung die Daten anonymisiert werden. Dies wird durch das oben beschriebene Verfahren gewährleistet, welches den Einsatz eines Codierers vorsieht. Da ein Teilnehmer in einem Mobilfunknetz mit seiner Rufnummer eindeutig zu identifizieren ist bedeutet dies, daß alle weiteren Prozeßschritte für die Erfassung von Verkehrflußdaten von dieser Rufnummer getrennt und unabhängig durchzuführen.

Für die Durchführung des erfindungsgemäßen Verfahrens können ferner auch Mobilfunkendgeräte zur Anwendung kommen, die eine integrierte Funktion zum Empfang von GPS-Rohdaten umfassen. Bei den GPS-Rohdaten handelt es sich um die von den GPS-Satelliten empfangenen, noch nicht verarbeiteten Daten. Diese Daten werden nicht im Mobilfunkendgerät ausgewertet, sondern über das Mobilfunknetz erfindungsgemäß an die Zentrale gesendet, wo aus diesen Daten der Aufenthaltsort der Mobilstation bestimmt wird. Das Mobilfunkendgerät benötigt selbst also keine Einrichtungen zur Auswertung der GPS-Rohdaten.

Nachfolgend wird die Erfindung unter Bezugnahme auf zwei Zeichnungen näher erläutert. Dabei gehen aus den Zeichnungen und ihrer Beschreibung weitere Merkmale und Vorteile der Erfindung hervor. Es zeigen:
- Figur 1:: Schematisch den Aufbau eines digitalen zellularen Mobilfunknetzes und die Zusammenschaltung der Einrichtungen;
- Figur 2:: Beispielhaft eine Positionsbestimmung einer Mobilstation anhand des erfindungsgemäßen Verfahrens.

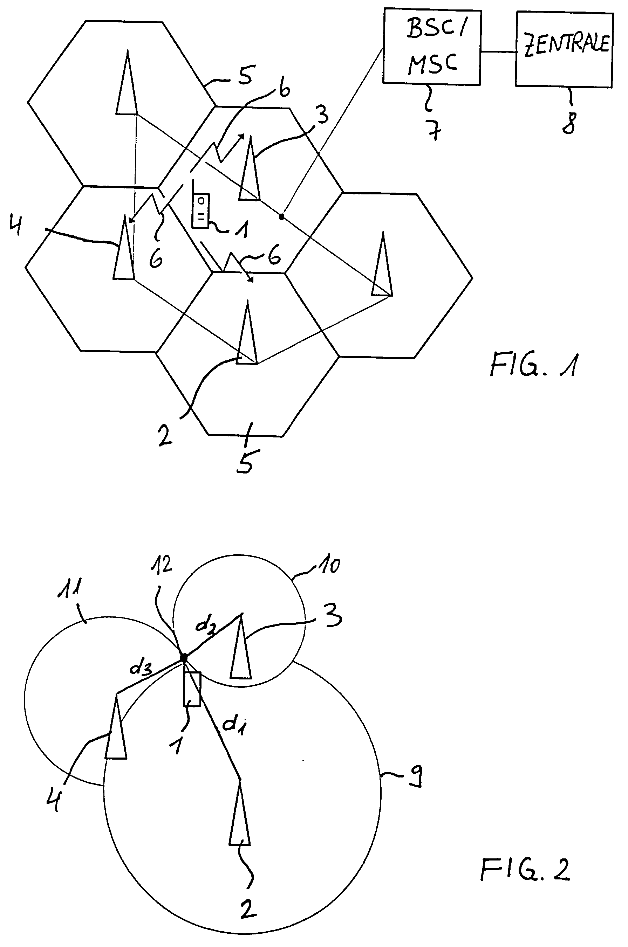

Figur 1 zeigt schematisch den grundlegenden Aufbau eines digitalen, zellularen Mobilfunknetzes 1. Das Mobilfunknetz besteht aus einer Vielzahl von Funkzellen 5, die jeweils von mindestens einer Basisstation 2,3,4 mit Funksignalen versorgt werden. Eine in einer Zelle 5 befindliche Mobilstation in Form eines Mobilfunkendgerätes 1 wird zumindest von der der Zelle 5 zugeordneten Basisstation 3 mit Funksignalen versorgt. Eine oder mehrere der Basisstationen 2,3,4 werden von einer Basisstationssteuerung bzw. Mobilvermittlungsstelle 7 gesteuert, welche die Signale der Basisstationen an weitere Basisstationssteuerungen bzw. Mobilvermittlungsstellen des Mobilfunknetzes bzw. auch andere Kommunkationsnetze weiterleiten.

Erfindungsgemäss senden nun ausgewählte Mobilfunkendgeräte des Mobilfunknetzes, z.B. das Mobilfunkendgerät 1, in definierten zeitlichen Abständen ein Funksignal in Form einer bekannten Bitfolge an mindestens zwei der Basisstationen 2,3,4, wobei in den Basisstationen 2,3,4 durch Korrelationsberechnungen der zeitliche Abstand zum jeweiligen Mobilfunkendgerät ermittelt wird. Es wird also der zeitliche Abstand bzw. die Signallaufzeit zwischen dem Mobilfunkendgerät 1 und z.B. der Basisstation 2 ermittelt, wobei ein typischer Wert, z.B. 0,05 Millisekunden, beträgt. Auch die übrigen Basisstationen 3 und 4 ermitteln so ihren zeitlichen Abstand zum Mobilfunkendgerät 1. Die Informationen über die zeitlichen Abstände des Mobilfunkendgeräts 1 von den Basisstationen 2,3,4 werden über die Basisstationssteuerung bzw. die Mobilvermittlungsstelle 7 an eine Zentrale 8 weitergeleitet. In der Zentrale wird mittels eines geeigneten mathematischen Verfahrens anhand dieser Informationen eine Ortsbestimmung des Mobilfunkendgeräts 1 durchgeführt.

Die Bestimmung des Standortes bzw. die Lokalisierung des Mobilfunkgeräts 1 wird anhand Figur 2 erläutert. Jede der Basisstationen 2,3,4 hat Informationen über den zeitlichen Abstand zum Mobilfunkendgerät 1 an die Zentrale 8 übermittelt. Dort werden die zeitlichen Abstände in Entfernungen umgerechnet. Beträgt der zeitliche Abstand z.B. 0,05 Millisekunden, so ergibt sich daraus unter Verwendung der Ausbreitungsgeschwindigkeit für Funkwellen von ca. 300000 km/Sekunde eine Streckendistanz von Basisstation zum Mobilfunkendgerät von ca. 15 km. Die Berechnung der Distanz zum Mobilfunkendgerät 1 wird also im Beispiel bei den Basisstationen 2,3,4 durchgeführt. Da der genaue Standort der Basisstationen 2,3,4 bekannt ist, kann nun um jede Basisstation 2,3,4 ein Kreisring 9,10,11 mit dem ermittelten Abstand d1, d2, d3 geschlagen werden. Am geometrischen Punkt 12, an dem sich die Kreislinien schneiden bzw. treffen, befindet sich das Mobilfunkendgerät 1. Aus den bekannten Längen- und Breitenkoordinaten der Basisstationen 2,3,4 lässt sich also mit dem bekannten Verfahren der sogenannten hyperbolischen Trilateration der Längen- und Breitengrad des Standorts der Basisstation des Mobilfunkendgeräts 1 bestimmen.

Die Ortung des Mobilfunkendgeräts 1 sowie anderer ausgewählter Mobilfunkendgeräte wird regelmässig, z.B. auch auf Anstoß von der Zentrale, durchgeführt. In der Zentrale werden daraufhin die Ortungsdaten nach verschiedenen Kriterien analysiert, um z.B. festzustellen, ob und wie schnell sich die einzelnen Mobilfunkendgeräte bewegen. Somit können die Ortungssignale bestimmten Klassen von Verkehrsmitteln zugeordnet werden, wobei auch digitalisierte Straßenkarten bzw. Landkarten von Vorteil sind, da die Lokalisierungsdaten mit den Verkehrswegeführungen korreliert werden können.

Schließlich können die ausgewerteten Signale unter anderem zur Steuerung von Verkehrsbeeinflussungsanlagen, wie z.B. Ampeln, eingesetzt werden, bzw. es können Staus oder Menschenansammlungen mit Hilfe dieses Verfahrens erkannt werden und geeignete Maßnahmen zur Verkehrsregelung getroffen werden.

### Zeichnungslegende

- 1: Mobilfunkendgerät
- 2: Basisstation
- 3: Basisstation
- 4: Basisstation
- 5: Funkzellen
- 6: Funksignal
- 7: Netzkomponenten (Basisstationssteuerung/Mobilvermittlung)
- 8: Zentrale
- 9: Kreisring
- 10: Kreisring
- 11: Kreisring
- d1: Abstand/Durchmesser
- d2: Abstand/Durchmesser
- d3: Abstand/Durchmesser

## Patentansprüche

1. Verfahren zur Erfassung von Verkehrsdaten mittels Lokalisierungsdaten von digitalen zellularen Mobilfunkkommunikationssystemen, wobei der Aufenthaltsort von Mobilstationen des Mobilfunkkommunikationssystems durch Laufzeitmessungen der zwischen Mobilstation und mindestens zwei Basisstationen ausgetauschten Funksignale ermittelt wird,
dadurch gekennzeichnet,
daß die Ermittlung des Aufenthaltsortes ausgewählter Mobilstationen regelmäßig in definierten zeitlichen Abständen erfolgt.

2. Verfahren nach Anspruch 1, dadurch gekennzeichnet, daß die ausgewählten Mobilfunkendgeräte in definierten zeitlichen Abständen eine bekannte Bitfolge an mindestens zwei Basisstationen des Mobilkommunikationssystems senden, mit der die Basisstationen durch Korrelationsberechnungen den zeitlichen Abstand zu den jeweiligen Mobilfunkendgeräten ermitteln, und
daß die Informationen über die zeitlichen Abstände der Mobilfunkendgeräte von den Basisstationen an eine Zentrale weitergeleitet werden, die mittels einem geeigneten mathematischen Verfahren anhand der Informationen regelmäßig eine Ortsbestimmung der Mobilfunkendgeräte durchführt.

3. Verfahren nach Anspruch 1 oder 2, dadurch gekennzeichnet, daß die Bitfolge in regelmäßigen zeitlichen Abständen gesendet wird.

4. Verfahren nach Anspruch 1 bis 3, dadurch gekennzeichnet, daß die Bitfolge eine Angabe über die Identität des Mobilteilnehmers oder des Endgerätes enthält.

5. Verfahren nach einem der Ansprüche 1 bis 4, dadurch gekennzeichnet, daß die ermittelten Ortungsdaten der Mobilfunkendgeräte anonymisiert werden.

6. Verfahren nach einem der Ansprüche 1 bis 5, dadurch gekennzeichnet, daß die Ortung der Mobilfunkendgeräte auf Anstoß der Zentrale durchgeführt wird.

7. Verfahren nach einem der Ansprüche 1 bis 6, dadurch gekennzeichnet, daß die ermittelten Ortungsdaten der Mobilfunkendgeräte mit geographischen Daten korreliert werden.

8. Verfahren nach einem der Ansprüche 1 bis 7, dadurch gekennzeichnet, daß die ermittelten Ortungsdaten der Mobilfunkendgeräte mit digitalisierten Karten von Verkehrswegen und/oder digitalisierten Stadtplänen und Landkarten korreliert werden.

9. Verfahren nach Anspruch 8, dadurch gekennzeichnet, daß anhand der Korrelation mit digitalisierten Karten von Verkehrswegen und/oder digitalisierten Stadtplänen und Landkarten eine Zuordnung der Mobilfunkendgeräte zu bestimmten Klassen von Verkehrsmitteln durchgeführt wird.

10. Verfahren nach einem der Ansprüche 1 bis 9, dadurch gekennzeichnet, daß anhand der Ortungsdaten Bewegungsprofile und/oder Geschwindigkeitsprofile der Mobilstationen erstellt werden.

11. Verfahren nach Anspruch 10, dadurch gekennzeichnet, daß anhand der Bewegungs- und/oder Geschwindigkeitsprofile eine Zuordnung der Mobilfunkendgeräte zu bestimmten Klassen von Verkehrsmitteln durchgeführt wird.

12. Verfahren nach einem der Ansprüche 1 bis 11, dadurch gekennzeichnet, daß die Ortungsdaten zur Steuerung von Verkehrsbeeinflußungsanlagen verwendet werden.

13. Verfahren nach einem der Ansprüche 1 bis 12, dadurch gekennzeichnet, daß die Ortungsdaten zur Verkehrsflußplanung und/oder Verkehrswegeplanung verwendet werden.

14. Verwendung des Verfahrens gemäß den Ansprüchen 1 bis 13 für die Verkehrsflußplanung, Verkehrswegeplanung und/oder Verkehrsregelung.
